# EUROPÄISCHE PATENTSCHRIFT

(11) **EP 0 761 676 B1**
(45) Veröffentlichungstag und Bekanntmachung des Hinweises auf die Patenterteilung: **30.10.2002**
(21) Anmeldenummer: 96113453.3
(22) Anmeldetag: 22.08.1996
(51) Int. Cl.: C07F 9/50

(54) **Verfahren zur Herstellung von Triphenylphosphin**
Process for the preparation of triphenyl phosphines
Procédé de préparation de triphényl phosphines

(30) Priorität: 01.09.1995 DE 19532310
(43) Veröffentlichungstag der Anmeldung: 12.03.1997
(73) Patentinhaber: BASF AKTIENGESELLSCHAFT, 67056 Ludwigshafen (DE)
(72) Erfinder: Hermeling, Dieter, 67459 Böhl-Iggelheim (DE); Hugo, Randolf, 67246 Dirmstein (DE); Lechtken, Peter, 67227 Frankenthal (DE); Rotermund, Gerhard W., 68165 Mannheim (DE); Siegel, Hardo, 67346 Speyer (DE)

(56) Entgegenhaltungen:
- EP-A- 0 548 682
- DE-A- 4 326 952
- GB-A- 1 029 924

## Beschreibung

Die vorliegende Erfindung betrifft ein Verfahren zur Herstellung von Triphenylphosphin durch Reduktion von Triphenylphosphindichlorid an unedlen Metallen, wobei das Triphenylphosphindichlorid zu 50 bis 100 Gew.-% kovalent und zu 50 bis 0 Gew.-% ionisch vorliegt.

Triphenylphosphin wird in der Wittig-Synthese zur Herstellung olefinischer Verbindungen eingesetzt. Große technische Bedeutung hat die Wittig-Synthese z.B. bei der Herstellung von Vitamin A erlangt. Im Verlauf der Reaktion wird das in stöchiometrischen Mengen eingesetzte Triphenylphosphin zu Triphenylphosphinoxid oxidiert. Da die Herstellung des Triphenylphosphins und die Entsorgung des Triphenylphosphinoxids teuer sind, wird das Triphenylphosphin zweckmäßigerweise aus seinem Oxid zurückgewonnen. In der Technik hat sich eine zweistufige Regenerierung bewährt. Im ersten Schritt wird das Triphenylphosphinoxid beispielsweise nach DE-A-11 92 205 mit Phosgen oder nach DE-A-12 59 883 mit Thionylchlorid oder Phosphorpentachlorid in Triphenylphosphindichlorid überführt. Im zweiten Schritt wird das Triphenylphosphindichlorid z.B. mit Aluminium (DE-A-12 59 883), Eisen (US-A-3 780 111) oder Silicium (EP-A-548 682) zu Triphenylphosphin reduziert.

Aus DE 43 26 952 ist ein Verfahren zur Herstellung von Triphenylphosphin bekannt, bei dem eine Triphenylphosphindichloridlösung mit einem Cl-Gehalt < 1000 ppm eingesetzt wird.

Triphenylphosphindichlorid kann in einer kovalenten Form 1 und in einer ionischen Form 2 vorliegen.

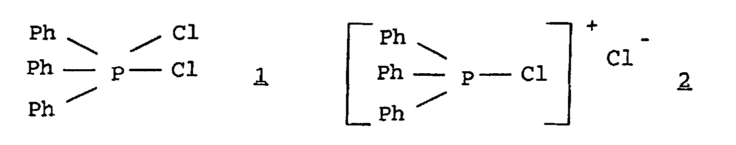

Aus J. Am. Chem. Soc., Vol. 90, 6332 bis 6335 (1968) ist die Umsetzung von Triphenylphosphin mit Chlor zu Triphenylphosphindichlorid bekannt. Mit überschüssigem Chlor wurde ionisches gebildet, mit abnehmender Chlormenge nahm der Anteil des kovalenten Triphenylphosphindichlorids zu.

In Tetrahedron Letters (1967) 2321 bis 2324 und in J. Am. Chem. Soc. (1968) 6332 bis 6335 wird für das ionische Chlortriphenylphosphoniumsalz eine chemische Verschiebung von (-65) ppm [dies entspricht nach heutiger Definition einer chemischen Verschiebung von (+65) ppm] angegeben. Für das vermeintliche kovalente Dichlortriphenylphosphoran werden (-8) ppm [nach heutiger Definition (+8) ppm] bzw. (+14) ppm [nach heutiger Definition (-14) ppm] angegeben. Die Messungen wurden in Acetonitril und Nitrobenzol durchgeführt. Als Standard diente 85%ige H₃PO₄.

Aus Kontakte (1974), 9 bis 16 ist bekannt, daß Triphenylphosphindichlorid durch seine hygroskopischen Eigenschaften sehr instabil ist und sehr leicht hydrolysiert.

Der vorliegenden Erfindung lag daher die Aufgabe zugrunde, den zuvor genannten Nachteilen abzuhelfen und die Herstellung von Triphenylphosphin aus Triphenylphosphindichlorid wirtschaftlicher und einfacher zu gestalten.

Demgemäß wurde ein neues und verbessertes Verfahren zur Herstellung von Triphenylphosphin durch Reduktion von Triphenylphosphindichlorid an unedlen Metallen bei Temperaturen von 50 bis 150°C und Drücken von 0,2 bis 10 bar gefunden, welches dadurch gekennzeichnet ist, daß das Triphenylphosphindichlorid zu 50 bis 100 Gew.-% kovalent und zu 50 bis 0 Gew.-% ionisch vorliegt.

Überraschenderweise wurde gefunden, daß die Struktur des Triphenylphosphindichlorids einen entscheidenden Einfluß auf die Reduktion in der Weise ausübt, daß die kovalente Form schneller und/oder in besseren Ausbeuten zum Triphenylphosphin reduziert wird als die ionische Form.

Die ionische und kovalente Form des Triphenylphosphindichlorids können auf einfache Weise anhand ihrer chemischen Verschiebungen im ³¹P-NMR Spektrum unterschieden werden. Die ionische Form hat im Lösungsmittel Chlorbenzol eine chemische Verschiebung von (+65) ppm und die kovalente Form hat im gleichen Lösungsmittel eine chemische Verschiebung von (-45) ppm. Als (externer) Standard dient 85%ige H₃PO₄. Das erfindungsgemäße Verfahren zeichnet sich durch den Einsatz des Triphenylphosphindichlorids aus, das zu 50 bis 100 Gew.-%, bevorzugt 70 bis 100 Gew.-%, besonders bevorzugt 85 bis 100 Gew.-%, insbesondere 95 bis 100 Gew.-% in kovalenter Form vorliegt, meßbar im ³¹P-NMR Spektrum als chemische Verschiebung von (+20) bis (-50) ppm, bevorzugt 0 bis (-50) ppm, besonders bevorzugt (-25) bis (-50) ppm, insbesondere (-40) bis (-50) ppm in 10 bis 15%igen Lösungen von Triphenylphosphindichlorid in Chlorbenzol bei Raumtemperatur ohne jegliche weiteren Zusätze.

Als unedle Metalle eignen sich in der Regel Scandium, Yttrium, Lithium, Natrium, Kalium, Rubidium, Lanthan, Titan, Zirkon, Hafnium, Vanadin, Niob, Tantal, Chrom, Molybdän, Wolfram, Mangan, Technetium, Rhenium, Eisen, Nickel, Cobalt, Zink, Beryllium, Magnesium, Calcium, Strontium, Barium, Bor, Aluminium, Gallium, Indium, Thallium, Silicium, Germanium, Zinn, Blei, Selen, Tellur oder deren Gemische, bevorzugt Lithium, Natrium, Titan, Zirkon, Vanadin, Niob, Chrom, Molybdän, Mangan, Eisen, Nickel, Cobalt, Zink, Magnesium, Calcium, Bor, Aluminium, Silicium, Zinn, Blei oder deren Gemische, besonders bevorzugt Natrium, Eisen, Silicium, Magnesium oder deren Gemische, insbesondere Aluminium. Die Metalle können z.B. als Barren, Späne oder Gries eingesetzt werden. Aluminium wird bevorzugt mit einem Teilchendurchmesser von 100 bis 2000 µm, besonders bevorzugt 100 bis 800 µm eingesetzt. Das verwendete Reduktionsmittel kann in äquimolaren Mengen eingesetzt werden, vorzugsweise wird das Reduktionsmittel aber in 2 bis 20 molarem Überschuß eingesetzt.

Das erfindungsgemäße Verfahren kann bei Temperaturen von 50 bis 150°C, bevorzugt 80 bis 120°C und Drücken von 0,2 bis 10 bar, bevorzugt 0,5 bis 5 bar, besonders bevorzugt bei Normaldruck (Atmosphärendruck) kontinuierlich oder diskontinuierlich, bevorzugt in einem inerten Lösungsmittel durchgeführt werden.

Als Lösungsmittel eignen sich beispielsweise aromatische Kohlenwasserstoffe wie Toluol und Xylole, chlorierte Kohlenwasserstoffe, bevorzugt chlorierte aromatische Kohlenwasserstoffe wie Chlorbenzol oder Nitrile wie Benzonitril und Acetonitril.

Reines, kovalentes Triphenylphosphindichlorid läßt sich bei der Verwendung absolut wasserfreier Reagenzien, Lösungsmittel und Apparaturen z.B. durch Chlorierung von Triphenylphosphinoxid mit Phosgen hergestellen.

Kovalentes Triphenylphosphindichlorid läßt sich bei der thermischen Zersetzung von ionischem Triphenylphosphindichlorid z.B. unter destillativer Abtrennung salzbildender Säure oder LewisSäure erhalten. Es ist auch möglich, die ionische Form durch Zugabe von Basen oder Lewis-Basen in die kovalente Form zu überführen. Da die beiden Formen in der Regel im Gleichgewicht zueinander stehen, wird die kovalente Form durch die Neutralisation insbesondere dann begünstigt, wenn das durch die Neutralisation gebildete Salz ausfällt. Je nach Stabilität der Chlortriphenylphosphoniumkomplexe kann die Neutralisation bei Raumtemperatur oder bei höheren Temperaturen erfolgen.

Die ³¹P-NMR Spektren wurden bei Raumtemperatur in Chlorbenzol als Lösungsmittel vermessen. Die TPPCl₂ - Konzentration betrug 10 bis 15 Gew.-%. Die Messung wurde ohne Lock, ohne deuteriertes Lösungsmittel und ohne Probenshim durchgeführt. Der Probe wurden keine weiteren Substanzen zugesetzt. Die Meßdauer der Probe betrug 0,5 bis 5 Stunden. Die Meßfrequenz betrug 145,8 MHz. Der Meßbereich war (+250) bis (-100) ppm, ¹H-gekoppelt. Die Meßbedingungen waren CDCl₃-Feldwerte und 85%ige H₃PO₄ als Referenz. Nach heutigem Wissensstand hat ionisches Triphenylphosphindichlorid unter den angegebenen Bedingungen eine chemische Verschiebung von (+65) ppm und kovalentes eine chemische Verschiebung von (-45) ppm. Als Folge einer Umdefinition haben die Phosphor-NMR Spektren der zitierten Literaturstellen der siebziger Jahre ein umgekehrtes Vorzeichen.

### Beispiele

### Beispiel 1

33,3 g (0,1 mol) Triphenylphosphindichlorid gelöst in 189 g Chlorbenzol (³¹P-NMR: δ = -36 ppm) und 5,4 g (0,2 mol) Aluminium mit einer Teilchengröße von 200 bis 400 µm wurden unter Rühren 15 Minuten bei 110°C reduziert, anschließend hydrolysiert und gaschromatographisch analysiert. Bei der Hydrolyse wurde nicht umgesetztes Triphenylphosphindichlorid in Triphenylphosphinoxid überführt, so daß das gaschromatographisch ermittelte Verhältnis von Triphenylphosphin zu Triphenylphosphinoxid direkt den Umsatzgrad der Reduktion wiedergibt. Das Reaktionsgemisch enthielt 98 Gew.-% Triphenylphosphin und 2 Gew.-% Triphenylphosphinoxid.

### Vergleichsversuch A

Zu 33,3 g (0,1 mol) Triphenylphosphindichlorid (TPPCl₂) gelöst in 189 g Chlorbenzol (³¹P-NMR: δ = -29 ppm) wurden 13,3 g (0,1 mol) wasserfreies AlCl₃ gegeben. Die Lösung enthielt nun ionisches [TPPCl]⁺ [AlCl₄]⁻ (δ = +65 ppm). Das Verhältnis [TPPCl]⁺ zu Triphenylphosphinoxid betrug 97:3. Nach Zugabe von 5,4 g Aluminium mit einer Teilchengröße von 200 bis 400 µm wurde das Reaktionsgemisch unter Rühren 60 Minuten bei 110°C reduziert. Nach 15, 30 und 60 Minuten wurden Proben genommen und wie in Beispiel 1 beschrieben, hydrolysiert und analysiert. Nach 15 Minuten Reaktionszeit enthielt das Reaktionsgemisch 43 Gew.-% Triphenylphosphin und 57 Gew.-% Triphenylphosphinoxid, nach 30 Minuten 65 Gew.-% Triphenylphosphin und 35 Gew.-% Triphenylphosphinoxid und nach 60 Minuten 80 Gew.-% Triphenylphosphin und 20 Gew.-% Triphenylphosphinoxid.

### Vergleichsversuch B

Zu 33,3 g (0,1 mol) Triphenylphosphindichlorid gelöst in 189 g Chlorbenzol wurden 13,3 g (0,05 mol) AlBr₃ gegeben. Die Lösung enthielt ionisches [TPPCl]⁺ mit einer chemischen Verschiebung von +65 ppm im ³¹P-NMR Spektrum. Das Gemisch wurde wie in Vergleichsbeispiel B beschrieben, mit Aluminium reduziert, hydrolisiert und analysiert. Nach einer Reaktionszeit von 15 Minuten enthielt das Reaktionsgemisch 51 Gew.-% Triphenylphosphin und 49 Gew.-% Triphenylphosphinoxid, nach 30 Minuten 74 Gew.-% Triphenylphosphin und 26 Gew.-% Triphenylphosphinoxid und nach 60 Minuten 84 Gew.-% Triphenylphosphin und 16 Gew.-% Triphenylphosphinoxid.

### Vergleichsversuch C

Zu einer Lösung von 139 g (0,5 mol) Triphenylphosphinoxid in 150 ml Chloroform wurde unter Rühren innerhalb von 2 h bei 20°C eine Lösung von 34,7 g (0,35 mol) Phosgen in 100 ml Chloroform zugetropft. Innerhalb weiterer 1,5 h kristallisierte ein Triphenylphosphindichlorid - Chloroform Addukt aus. Es wurde 1 h bei 0°C nachgerührt und die Kristalle abfiltriert. Man erhielt 184,1 g chloroformfeuchtes Addukt.

40 g dieses Adduktes wurden in 190 ml Chlorbenzol gelöst. Das ³¹P-NMR Spektrum zeigte eine chemische Verschiebung von +39 ppm. Das Addukt war frei von Nebenprodukten. Die chlorbenzolische Lösung des Adduktes wurde, wie in Vergleichsbeispiel A beschrieben, bei 110°C mit Aluminium reduziert. Nach einer Reaktionszeit von 20 Minuten wurde das Reaktionsgemisch hydrolysiert und analysiert. Man erhielt 45 Gew.-% Triphenylphosphin und 55 Gew.-% Triphenylphosphinoxid.

### Beispiel 2

Zu einer Lösung von 32 g (0,12 mol) Triphenylphosphinoxid in 128 g Benzonitril wurden unter Rühren bei 80°C innerhalb von 10 Minuten 72,6 g (0,23 mol) Thionylchlorid zugetropft und 1 h bei 80°C gerührt. Das Reaktionsgemisch enthielt 82 Gew.-% [TPPCl]⁺ (δ = +65 ppm) und 18 Gew.-% nicht umgesetztes Triphenylphosphinoxid. Eine Probe wurde mit einem Überschuß Aluminium 2 Stunden bei 130°C reduziert, hydrolysiert und analysiert. Die Analyse ergab 100 Gew.-% Triphenylphosphinoxid, d.h. das ionische APPCl⁺ konnte unter den angegebenen Bedingungen nicht reduziert werden. Das Chlorierungsgemisch wurde anschließend bis zu einer Sumpftemperatur von 160°C andestilliert. Man erhielt Triphenylphosphindichlorid mit einer chemischen Verschiebung von +39 ppm. Das Reaktionsgemisch enthielt 61 Gew.-% Triphenylphosphindichlorid und 39 Gew.-% Triphenylphosphinoxid. Es wurde wiederum eine Probe genommen, mit einem Überschuß Aluminium 2 h bei 130°C reduziert, hydrolisiert und analysiert. Erneut wurden 0 Gew.-% Triphenylphosphin analysiert. Das Reaktionsgemisch wurde bei 162°C/400 mbar andestilliert. Man erhielt 12,8 g eines Gemisches aus 54 Gew.-% Triphenylphosphindichlorid und 46 Gew.-% Triphenylphosphinoxid mit einer chemischen Verschiebung des Triphenylphosphindichlorids von -1 ppm.

Die erneute Reduktion einer Probe unter den oben angegebenen Bedingungen ergab 31 Gew.-% Triphenylphosphin und 69 Gew.-% Triphenylphosphinoxid.

### Beispiel 3

14,4 g einer Lösung von Triphenylphosphindichlorid (ca. 10 Gew.-%) in Chlorbenzol mit einem Verhältnis Triphenylphosphindichlorid:Triphenylphosphinoxid von 85:15 (chemische Verschiebung von Triphenylphosphindichlorid: δ = -41 ppm) wurden mit 3 g Aluminium 15 Minuten bei 110°C reduziert. Nach üblicher Aufarbeitung und Analytik erhielt man 85 Gew.-% Triphenylphosphin und 15 Gew.-% Triphenylphosphinoxid bestimmt.

### Vergleichsversuch D (Vergleich zu Beispiel 3)

Zu 53 g einer 10 %-igen Triphenylphosphindichlorid-Lösung in Chlorbenzol (Verhältnis Triphenylphosphindichlorid:Triphenylphosphinoxid = 85:15) wurden 0,1 g Thionylchlorid gegeben. Die chemische Verschiebung des Triphenylphosphindichlorid betrug daraufhin +4 ppm. Nach üblicher Reduktion und Aufarbeitung enthielt das Reaktionsgemisch 34 Gew.-% Triphenylphosphin und 66 Gew.-% Triphenylphosphinoxid.

### Beispiel 4

In einem kontinuierlich betriebenen Rührkessel, der mit 1 Liter Lösung des Reduktionsgemisches von Triphenylphosphindichlorid mit Aluminium sowie 80 g Aluminium der Teilchengröße 400 bis 600 µm gefüllt war, wurden pro Stunde 133 g (0,4 mol) kovalentes Triphenylphosphindichlorid in 770 g Chlorbenzol (³¹P-NMR: δ = -40 ppm) dosiert. Eine entsprechende Menge Reaktionsprodukt wurde aus dem Rührkessel ausgetragen. Einmal pro Stunde wurden 7,2 g (0,27 mol) frisches Aluminium in den Reaktor gegeben. Die Reduktion wurde bei einer Temperatur von 110°C durchgeführt und das Aluminium möglichst gleichmäßig verteilt. Nach Hydrolyse und gaschromatographischer Analyse enthielt der Reaktionsaustrag 98 Gew.-% Triphenylphosphin und 2 Gew.-% Triphenylphosphinoxid.

### Vergleichsversuch E (Vergleich zu Beispiel 4)

In die oben beschriebene Apparatur wurden pro Stunde 10 g (0,4 mol) ionisches [TPPCl]⁺ (chemische Verschiebung im ³¹P-NMR Spektrum: +65 ppm) in 770 g Chlorbenzol kontinuierlich zudosiert. Die Analyse des Reaktionsaustrags ergab 89 Gew.-% Triphenylphosphin und 11 Gew.-% Triphenylphosphinoxid.

## Patentansprüche

1. Verfahren zur Herstellung von Triphenylphosphin durch Reduktion von Triphenylphosphindichlorid an unedlen Metallen bei Temperaturen von 50 bis 150°C und Drücken von 0,2 bis 10 bar, **dadurch gekennzeichnet, daß** das Triphenylphosphindichlorid zu 50 bis 100 Gew.-% kovalent und zu 50 bis 0 Gew.-% ionisch vorliegt.

2. Verfahren zur Herstellung von Triphenylphosphin nach den Anspruch 1, **dadurch gekennzeichnet, daß** das Triphenylphosphindichlorid zu 70 bis 100 Gew.-% kovalent und zu 30 bis 0 Gew.-% ionisch vorliegt.

3. Verfahren zur Herstellung von Triphenylphosphin nach Anspruch 1, **dadurch gekennzeichnet, daß** man Triphenylphosphindichlorid einsetzt, für das die chemische Verschiebung des Phosphorsignals im ³¹P-NMR Spektrum in Chlorbenzol (+20) bis (-50) ppm bezogen auf 85%ige H₃PO₄ als Standard beträgt.

4. Verfahren zur Herstellung von Triphenylphosphin nach den Ansprüchen 1 bis 3, **dadurch gekennzeichnet, daß** man Triphenylphosphindichlorid einsetzt, daß die chemische Verschiebung des Phosphorsignals im ³¹P-NMR Spektrum in Chlorbenzol 0 bis (-50) ppm bezogen auf 85%ige H₃PO₄ als Standard beträgt.

5. Verfahren zur Herstellung von Triphenylphosphin nach den Ansprüchen 1 bis 4, **dadurch gekennzeichnet, daß** man als unedle Metalle Aluminium, Eisen, Silicium, Magnesium oder deren Gemische einsetzt.

6. Verfahren zur Herstellung von Triphenylphosphin nach den Ansprüchen 1 bis 5, **dadurch gekennzeichnet, daß** man die Umsetzung bei Temperaturen von 80 bis 120°C durchführt.

7. Verfahren zur Herstellung von Triphenylphosphin nach den Ansprüchen 1 bis 6, **dadurch gekennzeichnet, daß** man die Umsetzung bei Normaldruck durchführt.

## Claims

1. A process for preparing triphenylphosphine by reducing triphenylphosphine dichloride on base metals at from 50 to 150°C under from 0.2 to 10 bar, wherein the triphenylphosphine dichloride is 50-100% by weight in covalent form and 50-0% by weight in ionic form.

2. A process for preparing triphenylphosphine as claimed in claim 1, wherein the triphenylphosphine dichloride is 70-100% by weight in covalent form and 30-0% by weight in ionic form.

3. A process for preparing triphenylphosphine as claimed in claim 1, wherein triphenylphosphine dichloride for which the chemical shift of the phosphorus signal in the ³¹P-NMR spectrum in chlorobenzene is +20 to -50 ppm relative to 85% strength H₃PO₄ as standard is employed.

4. A process for preparing triphenylphosphine as claimed in any of claims 1 to 3, wherein triphenylphosphine dichloride for which the chemical shift of the phosphorus signal in the ³¹P-NMR spectrum in chlorobenzene is 0 to -50 ppm relative to 85% strength H₃PO₄ as standard is employed.

5. A process for preparing triphenylphosphine as claimed in any of claims 1 to 4, wherein aluminum, iron, silicon, magnesium or mixtures thereof are used as base metals.

6. A process for preparing triphenylphosphine as claimed in any of claims 1 to 5, wherein the reaction is carried out at from 80 to 120°C.

7. A process for preparing triphenylphosphine as claimed in any of claims 1 to 6, wherein the reaction is carried out under atmospheric pressure.

## Revendications

1. Procédé pour la préparation de triphénylphosphine par réduction de dichlorure de triphénylphosphine sur des métaux communs à des températures de 50 à 150°C et sous des pressions de 0,2 à 10 bar, **caractérisé par le fait que** le dichlorure de triphénylphosphine est présent pour 50 à 100 % en poids à l'état covalent et pour 50 à 0 % en poids à l'état ionique.

2. Procédé pour la préparation de triphénylphosphine selon la revendication 1, **caractérisé par le fait que** le dichlorure de triphénylphosphine est présent pour 70 à 100 % en poids à l'état covalent et pour 30 à 0 % en poids à l'état ionique.

3. Procédé pour la préparation de triphénylphosphine selon la revendication 1, **caractérisé par le fait qu'**on utilise du dichlorure de triphénylphosphine pour lequel le déplacement chimique du signal du phosphore dans le spectre de ³¹P-RMN dans le chlorobenzène s'élève à (+20) à (-50) ppm par rapport à H₃PO₄ à 85 % en tant qu'étalon.

4. Procédé pour la préparation de triphénylphosphine selon les revendications 1 à 3, **caractérisé par le fait qu'**on utilise du dichlorure de triphénylphosphine pour lequel le déplacement chimique_ du signal du phosphore dans le spectre de ³¹P-RMN dans le chlorobenzène s'élève à 0 à (-50) ppm par rapport à H₃PO₄ à 85 % en tant qu'étalon.

5. Procédé pour la préparation de triphénylphosphine selon les revendications 1 à 4, **caractérisé par le fait qu'**on utilise comme métaux communs l'aluminium, le fer, le silicium, le magnésium ou leurs mélanges.

6. Procédé pour la préparation de triphénylphosphine selon les revendications 1 à 5, **caractérisé par le fait qu'**on conduit la réaction à des températures de 80 à 120°C.

7. Procédé pour la préparation de triphénylphosphine selon les revendications 1 à 6, **caractérisé par le fait qu'**on conduit la réaction sous pression normale.
